# EUROPÄISCHE PATENTSCHRIFT

(11) **EP 0 843 087 B1**
(45) Veröffentlichungstag und Bekanntmachung des Hinweises auf die Patenterteilung: **03.05.2006**
(21) Anmeldenummer: 97116225.0
(22) Anmeldetag: 18.09.1997
(51) Int. Cl.: F02D 41/38, F02D 41/40

(54) **Kraftstoff-Einspritzvorrichtung für eine luftverdichtende Brennkraftmaschine**
Fuel injection apparatus for a diesel combustion engine
Dispositif d'injection de carburant pour moteur à combustion interne diesel

(30) Priorität: 13.11.1996 DE 19646942
(43) Veröffentlichungstag der Anmeldung: 20.05.1998
(73) Patentinhaber: Bayerische Motoren Werke Aktiengesellschaft, 80788 München (DE)
(72) Erfinder: Berger, Herbert, 4311 Schwertberg (AT)

(56) Entgegenhaltungen:
- EP-A- 0 409 247
- DE-A- 3 540 813
- US-A- 4 365 605
- US-A- 4 596 221
- US-A- 5 261 378
- PATENT ABSTRACTS OF JAPAN vol. 1998, no. 01, 30. Januar 1998 (1998-01-30) & JP 09 228881 A (NISSAN MOTOR CO LTD), 2. September 1997 (1997-09-02)

## Beschreibung

Die Erfindung betrifft eine Kraftstoff-Einspritzvorrichtung für eine luftverdichtende, insbesondere aufgeladene Brennkraftmaschine, mit einer elektronischen Steuereinheit für ein Mengenstellwerk zur Bestimmung der Einspritzmenge und mit einem elektronisch geregelten Spritzversteller zur Veränderung des Spritzbeginns, jeweils in Abhängigkeit vom Betriebspunkt. Zum technischen Umfeld wird beispielshalber auf die DE 39 28 875 A1 verwiesen.

Aus der EP 0 409 247 ist ein System zur Regelung der Einspritzmenge bekannt, bei dem in Abhängigkeit vom Ladedruck eine Einspritzmengenkorrektur vorgenommen wird.

Weiterhin ist aus der US 4,596,221 ein Verfahren zum Steuern der Kraftstoffzufuhr zur Brennkammer einer Dieselmaschine bekannt, bei der die Kraftstoffzufuhr in Abhängigkeit von einer Leistungsanforderung und der Spritzbeginn aufgrund einer empirisch ermittelten Wertetabelle korrigiert werden, um von einem unstabilen in einen stabilen Zustand zu gelangen.

Üblicherweise erfolgt bei luftverdichtenden Brennkraftmaschinen, d. h. insbesondere bei Diesel-Brennkraftmaschinen die Kraftstoff-Einspritzung unter Berücksichtigung quasi stationärer logischer Eingangsgrößen, nämlich in Abhängigkeit vom jeweiligen Maschinen-Betriebspunkt, der im allgemeinen mittels eines Lastwunschgebers eingestellt wird. Der Lastwunschgeber wirkt dabei üblicherweise auf das Mengenstellwerk, mit Hilfe dessen die Einspritzmenge vorgegeben wird, während ein elektronisch geregelter Spritzversteller den Spritzbeginn, d. h. den Zeitpunkt der Kraftstoff-Einspritzung insbesondere unter Berücksichtigung der jeweils gewünschten Einspritzmenge festlegt.

Bei allen bisherigen Spritzbeginn-Ermittlungen für luftverdichtende Brennkraftmaschinen bleiben jedoch Anforderungen, die sich aus dem dynamischen Betrieb der Brennkraftmaschine ergeben, im wesentlichen unberücksichtigt. Wie bereits erwähnt, werden bislang bei der Spritzbeginnermittlung nämlich nur quasi stationäre Eingangsgrößen berücksichtigt. Die Tatsache, daß bei einer Betriebspunktänderung dynamische Vorgänge vorliegen, so beispielsweise im Luftansaugtrakt der Brennkraftmaschine, geht in die Spritzbeginn-Festlegung nur unzureichend ein. Daraus resultieren Nachteile nicht nur hinsichtlich der Geräuschentwicklung sowie der Emissionen der Brennkraftmaschine, sondern auch hinsichtlich der Fahrdynamik, wenn die Brennkraftmaschine für den Antrieb eines Kraftfahrzeuges vorgesehen ist.

Eine Abhilfemaßnahme für diese geschilderte Problematik aufzuzeigen, ist Aufgabe der vorliegenden Erfindung.
Die Lösung dieser Aufgabe ist dadurch gekennzeichnet, daß der Spritzbeginn bei einer Änderung des Betriebspunktes zusätzlich in einer ersten Alternative in Abhängigkeit von der innerhalb eines Zeitintervalls festgestellten Größe der Änderung der in die Brennräume der Brennkraftmaschinen gelangenden Luftmasse und/oder der vor den Brennräumen anliegenden Ladedruckänderung und/oder der Einspritzmengenänderung korrigiert wird. In einer zweiten Alternative, die nicht Gegenstand der Erfindung ist, wird der Spritzbeginn in Abhängigkeit von der Regelabweichung zwischen dem Ist- und dem Soll-Ladedruck korrigiert. Weiterhin können die beiden Alternativen auch miteinander kombiniert werden. Vorteilhafte Weiterbildungen sind Inhalt der Unteransprüche.

Erfindungsgemäß können dynamische Anforderungen, die abweichend zu den jeweiligen quasi stationären Optima eines Betriebspunktes sein können, berücksichtigt werden, wenn der Spritzbeginn im dynamischen Betrieb kor-rigierbar ist, und zwar insbesondere ladedruckabhängig bzw. luftmassenabhängig. Hierdurch wird somit direkt die Dynamik des zu den Brennräumen der Brennkraftmaschine gelangenden Luftdurchsatzes berücksichtigt. Als Alternative zum Luftdurchsatz erscheint auch die Berücksichtigung der Größe der Einspritzmengenänderung als zusätzlicher Eingangsparameter für eine Spritzbeginnverstellung sinnvoll.

Die jeweilige Änderung des Luftdurchsatzes, insbesondere die Änderung der in die Brennräume der Brennkraftmaschine gelangenden Luftmasse oder bei aufgeladenen Brennkraftmaschinen auch die Änderung des Ladedruckes soll dabei während einer Betriebspunktänderung nur innerhalb eines bestimmten Zeitintervalles analysiert werden, wobei die Größe dieser Änderung innerhalb dieses Zeitintervalles dann für die sog. dynamische Spritzbeginnkorrektur als Eingangsgröße fungiert. Zur Auswertung der Ladedruck-Regelabweichung als Maß für die Änderung des Luftdurchsatzes ist die Definition eines bestimmten Analyse-Zeitintervalls nicht erforderlich. Es empfiehlt sich, die Spritzbeginnkorrektur, die insbesondere eine Spätverstellung des Spritzbeginns zur Folge hat, lediglich zeitbegrenzt durchzuführen, und zwar abermals in Abhängigkeit von zumindest einer der genannten Größen Luftmassenänderung, Ladedruckänderung oder Einspritzmengenänderung. Die Dauer der Spritzbeginnkorrektur, d.h. deren Zeitbegrenzung kann dabei im Rahmen einer Versuchsreihe optimiert werden. In gleicher Weise kann auch die Länge des Zeitintervalles, innerhalb dessen die Größe der genannten Änderung(en) ermittelt wird, im Hinblick auf die gewünschten Ergebnisse durch Versuche oder Berechnungen optimiert werden.

Die eben genannte Spritzbeginnspätverstellung führt insbesondere bei aufgeladenen Diesel-Brennkraftmaschinen mit Direkteinspritzung, d. h. bei solchen ohne Vor- oder Wirbelkammer, während eines Beschleunigungsvorganges zu einer deutlichen Geräuschreduktion, wobei der direkte Zusammenhang zur Ladedruckänderung vorhanden ist. Wenn - wie angegeben - diese Spritzbeginnkorrektur, insbesondere eine Spätverstellung des Spritzbeginnes zeitlich eng begrenzt bleibt, wird die ansonsten nachteilige Wirkung, die durch eine generelle Spätverstellung zustandekommt, nicht spürbar.

Ein zusätzlicher Vorteil der erfindungsgemäßen Spritzbeginnkorrektur/-spätverstellung liegt in der Reduzierung der mechanischen Belastung der Brennkraftmaschine, da im Falle eines Beschleunigungsvorganges der Ladedruck bei derzeitigen abgas-turbo-aufgeladenen Regelkreisen ein starkes Überschwingverhalten zeigt. Die erfindungsgemäße Spritzbeginnspätverstellung kompensiert nun den Anteil der Zünddrucksteigerung, der durch den Überschwingvorgang eines Abgasturboladers erzeugt wird.

Weiterhin wird vorgeschlagen, die erfindungsgemäße Spritzbeginnkorrektur durch Aufschaltung von Korrekturkennfeldern in die übliche Steuerelektronik des elektronischen geregelten Spritzverstellers zu realisieren. Dies hält den Programmänderungsaufwand gering.

Wie eine derartige Softwarefunktion gestaltet sein kann, ist in der Zeichnung in Form von zwei Prinzipskizzen dargestellt. Es zeigen
- Fig. 1: eine Spritzbeginnkorrektur in Abhängigkeit von der Änderung des Ladedrucks und/oder der Luftmasse und/oder der Einspritzmenge und
- Fig. 2: eine Spritzbeginnkorrektur in Abnangigkeit von der Regelabweichung zwischen dem Ist- und dem Soll-Ladedruck, die nicht Gegenstand der Erfindung ist.

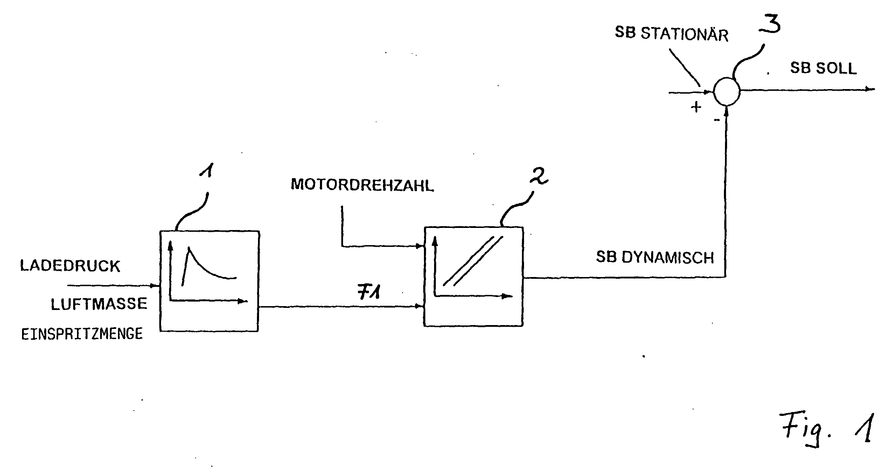

Nach Fig. 1 ist ein zeitbegrenztes Differenzierglied 1 (DT1-Glied) vorgesehen, welches beispielsweise als Eingangsgröße den aktuellen LADEDRUCK und/oder die aktuelle LUFTMASSE und/oder die aktuelle EINSPRITZMENGE erhält. In diesem zeitbegrenzten Differenzierglied 1 erfolgt die Feststellung der Größe der Luftmassenänderung oder der Ladedruckänderung oder der Einspritzmengenänderung, und zwar jeweils innerhalb eines Zeitintervalles. Die Ausgangsgröße dieses Differenziergliedes 1 ist ein Faktor F1, welcher erste Eingangsgröße für ein Korrekturkennfeld ist, das hier als Dynamik-Kennfeld 2 bezeichnet wird. Eine weitere Eingangsgröße für dieses Spritzbeginn-Dynamik-Kennfeld 2 ist die aktuelle Drehzahl der Brennkraftmaschine, hier MOTORDREHZAHL genannt. Ausgangswert dieses Korrekturkennfeldes ist der sog. dynamische Spritzbeginn SB DYNAMISCH, der im Additionspunkt 3 als Spritzbeginnspätverstellung, und daher subtraktiv zum üblichen stationären Spritzbeginn SB STATIONÄR, der entsprechend der bislang üblichen Berechnungsweise ermittelt wurde, addiert wird. Die Ausgangsgröße dieses Additionspunktes 3 ist der tatsächliche Sollwert SB SOLL für den Spritzbeginn, unter Berücksichtigung der erfindungsgemäßen dynamischen Spritzbeginnkorrektur, insbesondere Spritzbeginn-Spätverstellung.

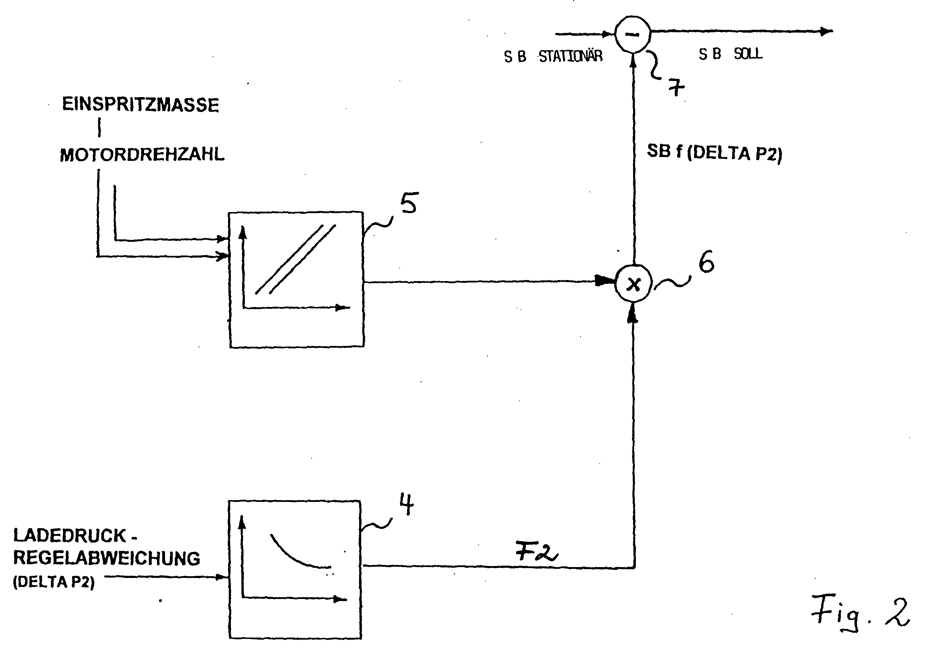

In Fig. 2 ist nicht Gegenstand der Erfindung alternativ ein Korrekturkennlinienblock 4 vorgesehen, dessen Eingangssignal die Regelabweichung DELTA P2 zwischen dem Soll- und dem Ist-Ladedruck ist. Voraussetzung ist vorzugsweise eine DieselBrennkraftmaschine mit einem Aufladeaggregat, wie z. B. einem AbgasTurbolader. Der Ausgang des Korrekturlinienblockes 4 liefert einen Faktor F2, der an eine Multiplizierstelle 6 übermittelt wird. Die Kraftstoffmenge EIN-SPRITZMASSE sowie die Drehzahl der Brennkraftmaschine MOTORDREHZAHL sind zwei Eingangsgrößen für einen Korrekturkennfeldblock 5. Ausgangsgröße des Korrekturkennfeldblockes 5 ist ein korrigierter Spritzbeginn, der an der Multiplizierstelle 6 mit dem Faktor F2 multipliziert wird. Ausgangs-größe der Multiplizierstelle 6 ist ein korrigierter Spritzbeginn als Funktion der Ladedruck-Regelabweichung, SB f (DELTA P2). Dieser Spritzbeginn SB f (DELTA P2) als dynamischer Spritzbeginn wird wiederum im Additionspunkt 7 als Spritzbeginnspätverstellung, und daher subtraktiv zum üblichen stationären Spritzbeginn SB STATIONÄR, der entsprechend der bislang üblichen Berechnungsweise ermittelt wurde, addiert. Wie auch im Beispiel nach Fig. 1 ist die Ausgangsgröße dieses Additionspunktes 7 der tatsächliche Sollwert SB SOLL für den Spritzbeginn, unter Berücksichtigung der erfindungsgemäßen dynamischen Spritzbeginnkorrektur, insbesondere Spritzbeginn-Spätverstellung.

Speziell bei aufgeladenen Dieselmotoren mit Direkteinspritz-Brennverfahren bringt eine Spritzbeginnspätverstellung während eines Beschleunigungsvorganges eine deutliche Geräuschreduktion, wobei der direkte Zusammenhang mit dem momentanen tatsächlichen Ladedruckniveau gegeben ist. Die Regeldifferenz aus Ist- und Soll-Ladedruck gibt eine verzögerungsfreie Information über den momentanen Aufladegrad und damit über die Verbrennungsgeräuschneigung der Brennkraftmaschine. Als vorteilhafte Begleiterscheinung bei Fahrzuständen, in denen der Turbolader durch Trägheitsmomente dynamisch "nachhinkt", wird durch die Spritzbeginn-Spätverstellung die Abgastemperatur und dadurch die Enthalpie an der Turbine vergrößert, wodurch das Ladedruckniveau erhöht wird. Somit wird durch die erfindungsgemäße Spritzbeginn-Korrektur eine luftverdichtende Brennkraftmaschine im Hinblick auf die Fahrdynamik, die Emissionsreduzierung und die Geräuschverminderung verbessert.

Da die erfindungsgemäße Spritzbeginnkorrektur auslegungsabhängig zeitlich eng begrenzt bleibt, wird die nachteilige Wirkung, die durch eine generelle Spätverstellung zustandekommt, nicht spürbar.

Selbstverständlich kann eine erfindungsgemäße Spritzbeginnkorrektur beispielsweise in Verbindung mit einer digitalen Diesel-Motor-Regelung auch auf andere Weise realisiert werden. Stets ergeben sich die beschriebenen Vorteile insbesondere hinsichtlich der Emissionen, des Geräuschniveaus und der Fahrdynamik, wenn der dynamische Betrieb der Brennkraftmaschine bei Ermittlung des Spritzbeginns berücksichtigt wird, und zwar insbesondere durch Spätverstellung desselben in Abhängigkeit von der Ladedruck-Regelabweichung sowie von der innerhalb eines Zeitintervalls festgestellten Größe der Luftmassenänderung, der Ladedruckänderung oder der Einspritzmengenänderung.

## Patentansprüche

1. Kraftstoff-Einspritzvorrichtung für eine luftverdichtende aufgeladene Brennkraftmaschine, mit einer elektronischen Steuereinheit für ein Mengenstellwerk zur Bestimmung der Einspritzmenge und mit einem elektronisch geregelten Spritzversteller zur Veränderung des Spritzbeginns, jeweils in Abhängigkeit vom Betriebspunkt, **dadurch gekennzeichnet, dass** der Spritzbeginn bei einer Änderung des Betriebspunktes zusätzlich in Abhängigkeit von der innerhalb eines Zeitintervalls festgestellten Größe
• der Änderung der in die Brennräume der Brennkraftmaschinen gelangenden Luftmasse und
• der vor den Brennräumen anliegenden Ladedruckänderung und
• der Einspritzmengenänderung
• korrigiert wird.

2. Kraftstoff-Einspritzvorrichtung nach Anspruch 1, **dadurch gekennzeichnet, dass** die Korrektur zeitbegrenzt in Abhängigkeit von zumindest einer der genannten Größen Luftmassenänderung, Ladedruckänderung oder Einspritzmengenänderung erfolgt.

3. Kraftstoff-Einspritzvorrichtung nach Anspruch 1 oder 2, **dadurch gekennzeichnet, daß** die Korrektur des Spritzbeginns, insbesondere eine Spätverstellung desselben, durch Aufschaltung von Korrekturkennfeldern in eine übliche Steuerelektronik erfolgt.

## Claims

1. A fuel injection device for a compression-ignition supercharged engine, comprising an electronic control unit for a flow-rate control unit for determining the volume injected and an electronically controlled injection adjuster for altering the beginning of the injection, in each case in dependence on the operating point, **characterised in that** after a change in the operating point the beginning of injection is corrected in dependence on the value, determined within a time interval, of
. the change in the air mass reaching the engine combustion chambers,
. the change in the boost pressure reaching the combustion chambers and
. the change in the injected volume.

2. A fuel injection device according to claim 1, **characterised in that** the correction is made in a limited time in dependence on at least one of the said quantities, that is the change in the air mass, the change in the boost pressure or the change in the volume injected.

3. A fuel injection device according to claim 1 or 2, **characterised in that** the correction of the beginning of injection, especially a late adjustment thereof, is made by overriding of correction performance graphs in a conventional control electronic unit.

## Revendications

1. Dispositif d'injection de carburant pour un moteur à combustion interne suralimenté diesel comportant une unité de commande électronique pour un module de réglage de quantité destinée à déterminer la quantité d'injection, et un régulateur d'injection réglé électroniquement pour modifier le début de l'injection, respectivement, en fonction du point de fonctionnement,
**caractérisé en ce qu'**
en cas de modification du point de fonctionnement le début de l'injection est corrigé en outre en fonction de la grandeur établie dans un intervalle de temps :
- de la modification de la masse d'air arrivant dans les chambres de combustion des moteurs à combustion interne, et
- de la modification de la pression d'admission se trouvant devant les chambres de combustion, et
- de la modification de la quantité d'injection.

2. Dispositif d'injection de carburant selon la revendication 1,
**caractérisé en ce que**
la correction a lieu de façon limitée dans le temps en fonction d'au moins l'une des grandeurs citées, à savoir modification de la masse d'air, modification de la pression d'admission ou modification de la quantité d'injection.

3. Dispositif d'injection de carburant selon la revendication 1 ou 2,
**caractérisé en ce que**
la correction du début de l'injection, en particulier, un réglage tardif de celui-ci, a lieu par l'intrusion des diagrammes caractéristiques de correction dans l'électronique de commande habituelle.
